# EUROPÄISCHE PATENTSCHRIFT

(11) **EP 0 255 903 B1**
(45) Veröffentlichungstag und Bekanntmachung des Hinweises auf die Patenterteilung: **27.01.1993**
(21) Anmeldenummer: 87110778.5
(22) Anmeldetag: 24.07.1987
(51) Int. Cl.: H04M 3/50, H04M 3/22, H04Q 3/545

(54) **Rechnergesteuerte Vermittlungseinrichtung mit Betriebszentraleinrichtung und Betriebsterminals**
Processor-controlled telephone exchange with a central operation device and operation terminals
Central téléphonique commandé par un calculateur avec dispositif central d'opération et terminaux d'opération

(30) Priorität: 08.08.1986 DE 3626801
(43) Veröffentlichungstag der Anmeldung: 17.02.1988
(73) Patentinhaber: SIEMENS AKTIENGESELLSCHAFT, 80333 München (DE)
(72) Erfinder: Bachhuber, Gerhard, Dipl.-Ing., D-8031 Gilching (DE)

(56) Entgegenhaltungen:
- DE-A- 2 749 740
- DE-A- 2 749 787
- IBM TECHNICAL DISCLOSURE BULLETIN, Band 28, Nr. 7, Dezember 1985, Seiten 2763-2766, New York, US; "Ten-thousand-line digital central office"

## Beschreibung

Der Betrieb, d. h. das Überwachen und Steuern aller Vermittlungsfunktionen sowie das Konfigurieren von Systemkomponenten von rechnergesteuerten Vermittlungseinrichtungen erfolgt prinzipiell über mit Eingabetastaturen und Bildschirm- oder Druckeinheiten ausgestattete Betriebsterminals. Ein derartiges Betriebsterminal - bei einer größeren Vermittlungseinrichtung auch mehrere Betriebsterminals - wird über eine bzw. mehrere in der Vermittlungseinrichtung angeordnete Betriebsschnittstellen angeschlossen. Jede dieser Betriebsschnittstellen beinhaltet eine Anpassung der physikalischen Eigenschaften der internen physikalischen Eigenschaften der Vermittlungseinrichtung an die der Betriebsterminals sowie eine Anpassung einer vermittlungsinternen an eine externe Kommunikationsprozedur. Auf der Basis dieser Kommunikationsprozeduren wird durch Übermitteln einer definierten Meldung bzw. Information über die Betriebsschnittstelle ein Überwachungs-, Steuer- oder Konfigurationsvorgang bzw. im Betriebsterminal ein diese Informationen anzeigender Vorgang eingeleitet.

Des weiteren werden die an die Betriebsschnittstellen der Vermittlungseinrichtung angeschlossenen Betriebsterminal zum Einrichten von insbesondere bei größeren Vermittlungseinrichtungen geforderten Abfrageplätzen bzw. Auskunftsplätzen eingesetzt. Ein Abfrage- bzw. Auskunftsplatz wird aus einem Betriebsterminal bzw. Abfrageterminal und einem an einen Teilnehmereingang der Vermittlungseinrichtung angeschlossenen Sprachterminal gebildet. Irgend ein auskunftssuchender Teilnehmer stellt mittels entsprechender Wahl über die Vermittlungseinrichtung eine Verbindung zu dem Sprachterminal des Abfrageplatzes her. Die Auskunftsperson leitet mit den bekannten Informationen Suchvorgänge in der Vermittlungseinrichtung oder im Abfrageterminal ein und teilt das Suchergebnis bzw. die Auskunftsinformation dem Teilnehmer mit oder leitet durch Eingabe einer hierfür vorgesehenen Meldung am Abfrageterminal einen Verbindungsaufbau des auskunftssuchenden Teilnehmers zum identifizierten Teilnehmer ein. Ein derartiger Abfrageplatz bzw. derartiges Abfrageterminal wurde in der Patentanmeldung DE-A-3 626 793 vorgeschlagen. Hierbei wird in einem Speicher eines durch ein Mikrorechnersystem gebildeten Abfrageterminals mittels Meldungen und Informationen zum Einrichten, Ändern, Löschen und Abfragen von anlagenspezifischen Informationen des Arbeitsspeichers der Vermittlungseinrichtung ein Abbild des die anlagenspezifischen Informationen speichernden Arbeitsspeicherbereiches der Vermittlungseinrichtung eingerichtet und aktualisiert. Auch die die Betriebszustände anzeigenden Informationen werden dem Speicher des Mikrorechnersystems übermittelt bzw. dort gespeichert und an einer im Mikrorechnersystem implementierten Bildschirmeinheit angezeigt. Über das im Sinne einer Auskunftsermittlung eingesetzte Mikrorechnersystem bzw. über Abfrageterminals wird durch Eingabe einer hierfür vorgesehenen Meldung der Verbindungsaufbau eines auskunftssuchenden mit einem identifizierten Teilnehmer eingeleitet.

Sollen einer Vermittlungseinrichtung mehrere Abfrageplätze bzw. Abfrageterminals zugeordnet werden, so muß die Vermittlungseinrichtung mit einer der Zahl der Abfrageplätze entsprechenden Anzahl von Betriebsschnittstellen ausgerüstet werden. Dies erfordert umfangreiche Erweiterungen der Hardware in der Vermittlungseinrichtung und stellt eine zusätzliche dynamische Belastung der Vermittlungseinrichtung dar, da im Speicher eines jeden Abfrageterminals ein Abbild des die zumindest anlagenspezifischen Informationen speichernden Arbeitsspeicherbereiches der Vermittlungseinrichtung eingerichtet und aktualisiert werden muß.

Der Erfindung liegt die Aufgabe zugrunde, eine rechnergesteuerte Vermittlungseinrichtung so auszugestalten, daß der Hardwareaufwand hinsichtlich der Anzahl der Betriebsschnittstellen reduziert und die dynamische Belastung der Vermittlungseinrichtung aufgrund des Einrichtens und Aktualisierens eines Abbildes des Arbeitsspeichers in an die Betriebsschnittstellen angeschlossenen Einrichtungen vermindert wird.

Die Aufgabe wird ausgehend von dem bekannten Vermittlungssystem durch die Merkmale des Anspruches 1 gelöst.

Der Vorteil der Erfindung besteht insbesondere darin, daß durch Einsatz einer Betriebszentraleinrichtung unabhängig von der Anzahl der erforderlichen Abfrageterminals nur eine einzige Betriebsschnittstelle in der Vermittlungseinrichtung implementiert werden muß und durch das Einrichten und Aktualisieren eines einzigen externen Speichers die dynamische Belastung der Vermittlungseinrichtung wesentlich verringert wird. Besonders vorteilhaft ist der Einsatz eines lokalen Netzwerkes zum Anschluß von Betriebs-bzw. Abfrageterminals aufgrund der einfach durchzuführenden Erhöhung und Verringerung der Anzahl der Teilnehmer eines lokalen Netzes, wodurch eine einfache Anpassung an die erforderliche Anzahl von Betriebsterminals bzw. Abfrageterminals ermöglicht wird. Des weiteren ist trotz unterschiedlicher, in weiten Grenzen variierbarer Anzahl von Betriebs- bzw. Abfrageterminals nur eine einzige Schnittstelle zum Anschluß eines lokalen Netzwerkes erforderlich.

Nach einer vorteilhaften Weiterbildung der Erfindung gemäß Patentanspruch 2 sind die Vermittlungseinrichtung (VE), die Betriebszentraleinrichtung (BZE), die Betriebsterminals (BT) sowie die Abfrageplätze (AP) derart ausgestaltet, daß eine Speicheraktualisierung durch eine entsprechende, an einem vorgegebenen Abfrageterminal erzeugte Meldung mittels einer automatisch in der Betriebszentraleinrichtung zu definierten Zeitpunkten erzeugten Meldung oder mittels einer in der Vermittlungseinrichtung erzeugten Meldung eingeleitet werden. Welche Einrichtung zur Einleitung einer Speicher- bzw. Arbeitsspeicheraktualisierung berechtigt ist, hängt im wesentlichen von der Art des Einsatzes der Betriebszentraleinrichtung und der Betriebsterminals ab. Zum Beispiel ist bei dem Einsatz der Betriebszentraleinrichtung als Abfrageplatzzentraleinrichtung und der Betriebsterminals als Abfrageterminals eine Einleitung einer Speicheraktualisierung in der Betriebszentraleinrichtung durch die Vermittlungseinrichtung sinnvoll.

Der Vorteil der Ausgestaltung der Erfindung gemäß Patentanspruch 3 besteht darin, daß bei vorgegebenen Einsatzfällen, z.B. Einsatz der Betriebssteuerzentrale als Abfrageplatzzentrale alle diesem Einsatzfall nicht dienenden Informationen und Meldungen von der Betriebszentraleinrichtung zwar erkannt, jedoch nicht bewertet und auch nicht weitergeleitet werden.

Die vorteilhaften Weiterbildungen der Erfindung gemäß der Patentansprüche 4 bis 6 zeigen mögliche Ausgestaltungen des lokalen Netzwerkes. Die Auswahl des einzusetzenden lokalen Netzwerkes hinsichtlich der Netzstruktur, des Zugriffsverfahrens auf das Übertragungsmedium und des eigentlichen Übertragungsmediums hängt im wesentlichen von der Verkehrsbelastung des lokalen Netzes, von der Anzahl der Betriebsterminals und von der Entfernung der Betriebsterminals untereinander ab und kann je nach Einsatzfall variiert werden.

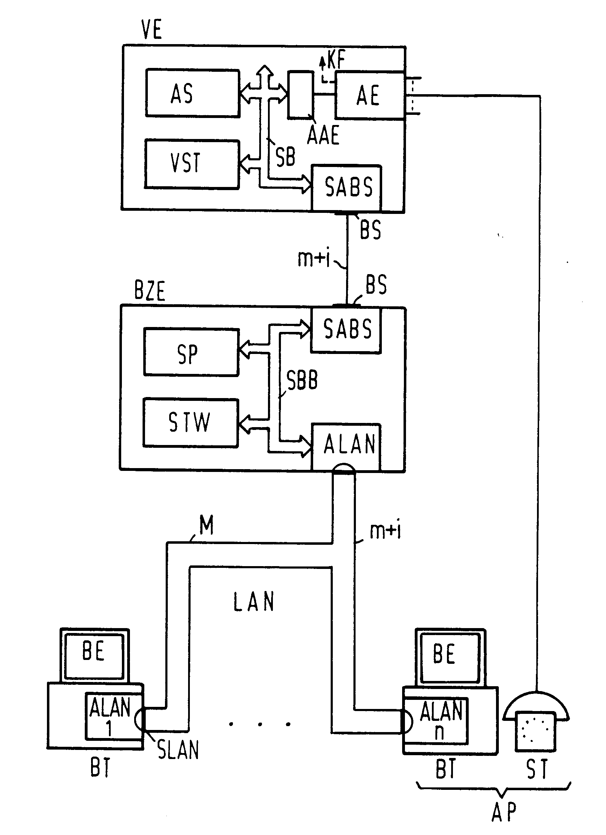

Im folgenden wird ein Ausführungsbeispiel der Erfindung anhand der Zeichnung näher erläutert.

Die Zeichnung zeigt die zur Erläuterung notwendigen Systemkomponenten eines digitalen Fernmeldevermittlungssystems VE. Eine der vermittlungstechnischen Steuerung dienendes Vermittlungssteuerwerk VST ist über einen Systembus SBV mit einem Arbeitsspeicher AS, einer Anpassungseinrichtung AAE und einer Schnittstellenanpassungseinrichtung SABS verbunden. Da die Signalisierungsbearbeitung - z. B. Teilnehmersignalisierung, Verbindungsleitungssignalisierung, usw. - von einer mit der Anpassungseinrichtung AEE verbundenen Anschlußeinheit AE und dem Vermittlungssteuerwerk VST gemeinsam durchgeführt wird, dient die Anpassungeinrichtung AAE im wesentlichen der prozeduralen Anpassung der beiden Einrichtungen. Die Anschlußeinheit AE ist des weiteren mit einem nicht dargestellten digitalen - z. B. aus einem oder mehreren Multiplexzeitstufen gebildeten - Koppelfeld KF verbunden. Dieses digitale Koppelfeld wird über eine wiederum nicht dargestellte und mit dem Systembus SBV verbundene Anpassungseinrichtung durch das Vermittlungssteuerwerk VST gesteuert bzw. eingestellt. In der Schnittstellenanpassungseinrichtung SABS findet sowohl eine Umsetzung der systembusinternen Kommunikationsprozeduren zu der Kommunikationsprozedur einer Betriebsschnittstelle als auch eine Anpassung der physikalischen Eigenschaften des Systembusses SBV an die physikalischen Eigenschaften der Betriebsschnittstelle BS statt.

Die physikalischen Eigenschaften der Betriebsschnittstelle BS entsprechen beispielsweise der CCITT-Empfehlung V24 und die definierten Meldungen m und Informationen i werden asynchron im ASCII-2-Format mit einer einstellbaren Datenübertragungsgeschwindigkeit übermittelt. Diese mehrpolige Betriebsschnittstelle BS ist mit einer mit gleicher Betriebsschnittstelle BS ausgestatteten Betriebszentraleinrichtung BZE verbunden. In einer weiteren, in der Betriebszentraleinrichtung BZE angeordneten Schnittstellenanpassungseinrichtung SABS wird sowohl die Anpassung der physikalischen Eigenschaften der Betriebsschnittstelle BS an die physikalischen Eigenschaften eines mit der Schnittstellenanpassungseinrichtung SABS verbundenen Systembus SBB als auch die Anpassung der Kommunikationsprozedur der Betriebsschnittstelle BS an eine systembusinterne Kommunikationsprozedur vorgenommen. Dieser in der Betriebszentraleinrichtung BZE angeordnete, aus Steuer-, Adreß- und Datenleitungen gebildete Systembus SBB ist des weiteren mit einem zentralen, der Steuerung der Betriebszentraleinrichtung BZE dienenden Steuerwerk STW, einem Speicher SP und einer weiteren Schnittstellenanpassungseinrichtung ALAN verbunden. In dieser weiteren Schnittstellenanpassungseinrichtung ALAN wird einerseits die Anpassung der physikalischen Eigenschaften des Systembusses SBB an die physikalischen Eigenschaften einer in dieser Schnittstellenanpassungseinrichtung ALAN implementierten Schnittstelle SLAN für ein lokales Netzwerk LAN durchgeführt und andererseits die systembusinterne Kommunikationsprozedur in eine für die Schnittstelle SLAN vorgesehene Kommunikationsprozedur umgesetzt. Für dieses Ausführungsbeispiel wurde aufgrund beispielhafter Voraussetzungen, wie wenige Betriebsterminals, kurze Entfernungen der Betriebsterminals untereinander und minimale Verzögerungszeiten im lokalen Netzwerk LAN, ein ringförmiges lokales Netzwerk LAN mit Basisbandübertragungsverfahren entsprechend dem ANSI/IEEE-Standard 802.5 ausgewählt. Gemäß diesem Standard wird die Schnittstelle SLAN für lokale Netzwerke LAN über zweiadrige und verdrillte Kupferleitungen mit den Betriebsterminals BT - ein Ringnetz bildend - verbunden. Hierbei müssen alle Betriebsterminals BT mit jeweils einer Anpassungseinrichtung ALAN für lokale Netzwerke LAN ausgerüstet sein. In diesen Anpassungseinrichtungen ALAN wird die Kommunikationsprozedur des lokalen Netzwerkes LAN in eine betriebsterminalinterne Prozedur umgesetzt und die physikalischen Eigenschaften der Schnittstelle SLAN an die betriebsterminalinternen physikalischen Eigenschaften angepaßt. Der prozedurale Zugriff der Betriebsterminals BT oder der Betriebszentraleinrichtung BZE auf das Übertragungsmedium M - entspricht den verdrillten Kupferleitungen - erfolgt in einem asynchronen Zeitmultiplexverfahren mittels der in dem ANSI/IEEE-Standard 802.5 definierten "Token Ring"-Zugriffsprotokollen. Ein von irgendeinem Betriebsterminal BT oder Betriebszentraleinrichtung BZE erzeugter sogenannter "freier Token" - entspricht einer im ANSI/IEEE-Standard definierten Meldung - durchläuft das Übertragungsmedium M in einer Richtung, wobei der "Token" sequentiell ein Betriebsterminal BT nach dem anderen bzw. Betriebszentraleinrichtung BZE passiert. Jedes übertragungswillige Betriebsterminal BT bzw. Betriebszentraleinrichtung BZE darf den "Token" in den Zustand "belegt" verändern, einen adressierten Datenblock begrenzter Länge anfügen und dem adressierten Betriebsterminal BT bzw. der Betriebszentraleinrichtung BZE diesen Datenblock übermitteln. Das adressierte Betriebsterminal BT bzw. die Betriebszentraleinrichtung BZE kopiert die Daten, läßt jedoch den "Token" unverändert. Das sendende Betriebsterminal BT bzw. die Betriebszentraleinrichtung BZE gibt nach Empfang der selbst gesendeten Daten den "Token" wieder frei und entfernt die von ihr gesendeten Daten vom Übertragungsmedium M. Die Betriebsterminals BT sind des weiteren jeweils mit einer Bildschirmeinheit BE und einer nicht dargestellten Eingabetastatur ausgestattet, um die über das lokale Netzwerk LAN zu übermittelnden Meldungen m und Informationen i anzuzeigen oder zu erzeugen.

Ein mit einem hierfür vorgesehenen Eingang der Anschlußeinheit AE der Vermittlungseinrichtung VE verbundenes Sprachterminal ST und ein Betriebsterminal BT bilden zusammen einen im Sinne einer Auskunftsermittlung eingesetzten Abfrage- bzw. Auskunftsplatz AP. Bei Einsatz der Betriebszentraleinrichtung BZE als beispielsweise Abfrageplatzzentraleinrichtung, an die über das lokale Netzwerk LAN einige im Sinne von Abfrageterminals eingesetzte Betriebsterminals angeschlossen sind, wird mittels der zum Einrichten, Ändern, Löschen und Abfragen von Informationen des Arbeitsspeichers AS der Vermittlungseinrichtung VE vorgesehenen Meldungen m und Informationen i ein Abbild des den die teilnehmerspezifischen Informationen speichernden Arbeitsspeicherbereichs im Speicher SP der Betriebszentraleinrichtung BZE eingerichtet und aktualisiert. Da bei diesem Einsatzfall die Aktualisierung des Arbeitsspeichers AS der Vermittlungseinrichtung VE vorzugsweise über ein an eine weitere Betriebsschnittstelle BS angeschlossenes weiteres und nicht dargestellten Betriebsterminal erfolgt, wird die Aktualisierung des Speichers SP der Betriebszentraleinrichtung BZE in der Vermittlungseinrichtung VE nach einer Aktualisierung des Arbeitsspeichers AS entweder automatisch oder nach einer entsprechenden manuellen Eingabe am weiteren Betriebsterminal eingeleitet. Mittels speziell hierfür vorgesehener und in der Betriebszentraleinrichtung BZE und den Betriebsterminals BT implementierter Suchverfahren und Kommunikationsprozeduren werden durch Eingabe von entsprechenden Such- bzw. Auskunftsmeldungen über die Tastaturen der Betriebsterminals BT die gezielt adressierten oder nach einem Suchvorgang ermittelten Informationen i aus dem Speicher SP der Betriebszentraleinrichtung BZE gelesen, über das lokale Netzwerk LAN zu den jeweiligen Betriebsterminals BT übermittelt und dort in der Bildschirmeinheit BE angezeigt. Diese Information i kann beispielsweise eine Fernsprechnummer eines Fernsprechteilnehmers repräsentieren, die aufgrund eines Auskunftswunsches eines weiteren, mit einem mit dem Sprachterminal ST eines Abfrageplatzes AP verbundenen Teilnehmers ermittelt wurde. Nach Eingabe einer speziellen Meldung m am Betriebsterminal BT des Abfrageplatzes AP wird auf Wunsch des auskunftssuchenden Teilnehmers ein Verbindungsaufbau mit dem identifizierten Teilnehmer eingeleitet. Diese Vermittlungsmeldung m wird nach Übertragung über das lokale Netzwerk LAN in der Betriebszentraleinrichtung BZE als solche erkannt und über die Betriebsschnittstellen BS zur Vermittlungseinrichtung VE weitergeleitet. Der Betriebszentraleinrichtung BZE obliegt des weiteren die Aufgabe, alle nicht im Sinne eines Betriebes einer Abfrageplatzzentraleinrichtung AP übermittelten Meldungen m und Informationen i zu erkennen und deren Weiterleiten an die Betriebsterminals BT bzw. an die Vermittlungseinrichtung VE zu unterbinden.

Selbstverständlich kann die Betriebssteuerzentrale bei entsprechender Ausgestaltung beispielsweise als Konfigurationsinformationen-Zentraleinrichtung oder als Betriebszustandsinformationen-Zentraleinrichtung eingesetzt werden. Je nach Einsatzfall und somit je nach Umfang der Meldungsbearbeitung und je nach Umfang der zu speichernden Informationen wird als Betriebszentraleinrichtung BZE ein Mikro- oder Kleinrechnersystem mit auf den Einsatzfall abgestimmten peripheren Einheiten - z. B. periphere Speicher und periphere Umsetzeinrichtungen - vorgesehen.

## Patentansprüche

1. Rechnergesteuerte Vermittlungseinrichtung mit für den Anschluß von Betriebsterminals (BT), insbesondere Bedien- und Abfrageterminals, vorgesehenen Betriebsschnittstellen (BS), derart ausgestaltet, daß über diese für den Betrieb der Vermittlungseinrichtung (VE) vorgesehene anlagenspezifische und die Betriebszustände anzeigende Meldungen und Informationen sowie eine einen Verbindungsaufbau eines mit einem Abfrageplatz (AP) verbundenen Teilnehmers mit einem identifizierten Teilnehmer einleitende Vermittlungsmeldung übermittelbar sind, wobei über eine der Betriebsschnittstellen (BS) eine Verbindung zu einer Betriebsschnittstelle einer Betriebszentraleinrichtung (BZE) besteht, die mit einem der Speicherung aller Betriebsinformationen dienenden Speicher (SP), einem der zentralen Ablaufsteuerung dienenden Steuerwerk (STW), einer der Anpassung an die prozeduralen und physikalischen Eigenschaften der Betriebsschnittstelle (BS) dienenden Anpassungseinheit (SABS), einer der Anpassung an die physikalischen und prozeduralen Eigenschaften eines lokalen Netzwerkes (LAN) dienenden Anpassungseinheit (ALAN) und einem aus Steuer-, Adreß- bzw. Datenbus bestehenden und alle Systemkomponenten der Betriebszentraleinrichtung (BZE) verbindenden Systembus (SB) ausgestattet ist, mit einem Übertragungsmedium (M) eines lokalen Netzwerkes (LAN), das eine in der Anpassungseinheit (ALAN) für lokale Netzwerke (LAN) implementierte Schnittstelle (SLAN) mit weiteren, in Betriebsterminals (BT) angeordneten Anpassungseinheiten (ALAN) für lokale Netzwerke (LAN) verbindet, wobei einem im Sinne des Bildens eines Abfrageplatzes (AP) eingesetzten Abfrageterminal (BT) ein mit einem hierfür vorgesehenen Anschluß der Vermittlungseinrichtung (VE) verbundenes Sprachterminal (ST) zugeordnet wird und die Vermittlungseinrichtung (VE), die Betriebszentraleinrichtung (BZE), die Betriebsterminals (BT) sowie die Abfrageplätze (AP) derart ausgestaltet sind, daß mittels der in der Betriebszentraleinrichtung (BZE) erkannten Meldungen (m) und Informationen (i) zum Einrichten, Ändern, Löschen und Abfragen der Informationen im Arbeitsspeicher (AS) der Vermittlungseinrichtung (VE) ein zumindest teilweises Abbild der Arbeitsspeicherinformationen der Vermittlungseinrichtung (VE) im Speicher (SP) der Betriebszentraleinrichtung (BZE) einrichtbar und aktualisierbar ist oder aufgrund der aktuelleren Informationen im Speicher (SP) der Betriebszentraleinrichtung (BZE) der Arbeitsspeicher (AS) der Vermittlungseinrichtung (VE) oder aufgrund von aktuelleren am Betriebsterminal (BT) erzeugten Informationen des Speichers (SP) der Betriebszentraleinrichtung (BZE) aktualisierbar ist sowie daß im Speicher (SP) der Betriebszentraleinrichtung (BZE) gespeicherte Informationen mittels auf das lokale Netzwerk (LAN) abgestimmter Kommunikationsprozeduren zum Betriebsterminal übermittelbar und dort selektiv in einer Bildschirmeinheit (BE) anzeigbar sind und daß die teilnehmerspezifischen Informationen im Sinne einer der Erzeugung einer Vermittlungsmeldung im Betriebsterminal (BT) und Übermittlung derselben zur Vermittlungseinrichtung (VE) dienenden Auskunftsermittlung auswertbar sind.

2. Rechnergesteuerte Vermittlungseinrichtung nach Anspruch 1,
**dadurch gekennzeichnet,**
daß die Vermittlungseinrichtung (VE), die Betriebszentraleinrichtung (BZE), die Betriebsterminals (BT) sowie die Abfrageplätze (AP) derart ausgestaltet, daß ein Speicheraktualisierungsvorgang durch eine entsprechende, an einem vorgegebenen Abfrageterminal (AP) erzeugte Meldung mittels einer automatisch in der Betriebszentraleinrichtung (BZE) zu definierten Zeitpunkten erzeugten Meldung oder mittels einer in der Vermittlungseinrichtung (VE) erzeugten Meldung eingeleitet wird.

3. Rechnergesteuerte Vermittlungseinrichtung nach einem der vorhergehenden Ansprüche,
**dadurch gekennzeichnet,**
daß die Vermittlungseinrichtung (VE), die Betriebszentraleinrichtung (BZE), die Betriebsterminals (BT) sowie die Abfrageplätze (AP) derart ausgestaltet sind, daß Meldungen (m) und Informationen (i), die nicht der Aktualisierung der Speicher (SP,AS) oder dem Abfragen von Informationen (i) aus dem Speicher (SP) der Betriebszentraleinrichtung (BZE) oder dem Einleiten eines Verbindungsaufbau eines Auskunftsuchenden mit einem identifizierten Teilnehmers dienen, von der Betriebszentraleinrichtung (BZE) nicht bewertet und nicht weitergeleitet werden.

4. Rechnergesteuerte Vermittlungseinrichtung nach einem der vorhergehenden Ansprüche,
**dadurch gekennzeichnet,**
daß das lokale Netzwerk (LAN) mittels eines Ring- oder Busnetzes realisierbar ist.

5. Rechnergesteuerte Vermittlungseinrichtung nach einem der vorhergehenden Ansprüche,
**dadurch gekennzeichnet,**
daß die Betriebszentraleinrichtung (BZE), die Betriebsterminals (BT) und die Abfrageplätze (AP) derart ausgestaltet sind, daß das Zugriffsverfahren auf das Übertragungsmedium (M) des lokalen Netzwerkes (LAN) mittels asynchroner Zeitmultiplexverfahren realisierbar ist.

6. Rechnergesteuerte Vermittlungseinrichtung nach einem der vorhergehenden Ansprüche,
**dadurch gekennzeichnet,**
daß das Übertragungsmedium (M) mittels verdrillter Kupferleitungen, Koaxialkabel oder Lichtwellenleiter realisierbar ist.

## Claims

1. Processor-controlled exchange having service interfaces (BS) provided for the connection of service terminals (BT), preferably of operating and inquiry terminals, designed in such a way that it is possible for system-specific messages and information provided for the operation of the exchange (VE) and indicating the operating statuses as well as a switching message initiating a connection establishment of a subscriber connected to an inquiry station (AP) to an identified subscriber to be transmitted, in which a connection exists via one of the service interfaces (BS) to a service interface of a central service station (BZE), which is equipped with a memory (SP) serving to store all the service information, a control unit (STW) serving as central execution controller, an adaptor unit (SABS) serving for the adaptation to the procedural and physical features of the service interface (BS), an adaptor unit (ALAN) serving for the adaptation to the physical and procedural features of a local area network (LAN), and a system bus (SB) comprising control, address and data buses and connecting all the system components of the central service station (BZE), having a transmission medium (M) of a local area network (LAN) that connects an interface (SLAN) implemented in the adaptor unit (ALAN) for local area networks (LAN) to further adaptor units (ALAN) arranged in service terminals (BT) for local area networks (LAN), in which a voice terminal (ST) connected to a connection of the exchange (VE) provided for this purpose is assigned to an inquiry terminal (BT) employed in respect of the formation of an inquiry station (AP), and the exchange (VE), the central service station (BZE), the service terminals (BT) and also the inquiry stations (AP) are designed in such a way that, by means of the messages (m) and information (i) detected in the central service station (BZE) for setting up, amending, deleting and interrogating the information in the main memory (AS) of the exchange (VE), an at least partial image of the main memory information of the exchange (VE) can be set up and updated in the memory (SP) of the central service station (BZE), or the main memory (AS) of the exchange (VE) can be updated on the basis of the more up-to-date information in the memory (SP) of the central service station (BZE), or on the basis of more up-to-date information of the memory (SP) of the central service station (BZE) generated at the service terminal (BT), and also that information stored in the memory (SP) of the central service station (BZE) can be transmitted to the service terminal by means of communications procedures adapted to the local area network (LAN) and can be selectively displayed there on a screen unit (BE), and that the subscriber-specific information can be evaluated in the manner of an inquiry detection serving for the generation of a switching message in the service terminal (BT) and transmission of the same to the exchange (VE).

2. Processor-controlled exchange according to Claim 1, characterised in that the exchange (VE), the central service station (BZE), the service terminals (BT) and also the inquiry stations (AP) are designed in such a way that a memory updating operation is initiated by a corresponding message generated at a predetermined inquiry terminal (AP) by means of a message automatically generated in the central service station (BZE) at defined times or by means of a message generated in the exchange (VE).

3. Processor-controlled exchange according to one of the preceding claims, characterised in that the exchange (VE), the central service station (BZE), the service terminals (BT) and also the inquiry stations (AP) are designed in such a way that messages (m) and information (i) which do not serve to update the memory (SP, AS) or to interrogate information (i) from the memory (SP) of the central service station (BZE) or to initiate a connection establishment of a person with an inquiry to an identified subscriber are not evaluated by the central service station (BZE) and are not forwarded.

4. Processor-controlled exchange according to one of the preceding claims, characterised in that the local area network (LAN) can be realised by means of a ring network or bus network.

5. Processor-controlled exchange according to one of the preceding claims, characterised in that the central service station (BZE), the service terminals (BT) and the inquiry stations (AP) are designed in such a way that the access method to the transmission medium (M) of the local area network (LAN) can be realised by means of asynchronous time-division multiplexing methods.

6. Processor-controlled exchange according to one of the preceding claims, characterised in that the transmission medium (M) can be realised by means of twisted copper lines, coaxial cable or optical waveguides.

## Revendications

1. Dispositif de commutation assisté par calculateur comportant des interfaces d'exploitation (BS) prévues pour le raccordement de terminaux d'exploitation (BT), notamment de terminaux de service et d'interrogation, et agencé de telle sorte que des signalisations et informations, qui sont spécifiques aux installations, qui sont prévues pour l'exploitation du dispositif de commutation (VE) et qui indiquent les états de fonctionnement, ainsi qu'une signalisation de commutation, qui déclenche l'établissement d'une liaison d'un abonné, raccordé à un poste d'interrogation (AP), à un abonné identifié, peuvent être transmises par l'intermédiaire desdites interfaces, et selon lequel par l'intermédiaire de l'une des interfaces d'exploitation (BS) est établie une liaison qui aboutit à une interface d'exploitation d'un dispositif central d'exploitation (BZE), qui est pourvu d'une mémoire (SP) utilisée pour mémoriser toutes les informations d'exploitation, d'une unité de commande (STW) utilisée pour la commande centrale d'exécution, d'une unité d'adaptation (SABS) utilisée pour réaliser l'adaptation aux caractéristiques de procédure ou aux caractéristiques physiques de l'interface d'exploitation (BS), d'une unité d'adaptation (ALAN) utilisée pour l'adaptation aux caractéristiques physiques et aux caractéristiques des procédures d'un réseau local (LAN), et d'un bus système (SB) qui est constitué par des bus de commande, de transmission d'adresses et de transmission de données et relie tous les composants du système du dispositif central d'exploitation (BZE), et comportant un milieu de transmission (M) d'un réseau local (LAN), qui relie une interface (SLAN), formée dans l'unité d'adaptation (ALAN) pour des réseaux locaux (LAN), à d'autres unités d'adaptation (ALAN), disposées dans des terminaux d'exploitation (BT) pour des réseaux locaux (LAN), et selon lequel à un terminal d'interrogation (BT) utilisé pour former un poste d'interrogation (AP) est associé un terminal vocal (ST) raccordé à une borne, prévue à cet effet, du dispositif de commutation (VE), et le dispositif de commutation (VE), le dispositif central d'exploitation (BZE), les terminaux d'exploitation (BT) ainsi que les postes d'interrogation (AP) sont agencés de telle sorte qu'à l'aide des signalisations (m) et informations (i) identifiées dans le dispositif central d'exploitation (BZE) pour l'insertion, la modification, l'effacement et l'interrogation des informations dans la mémoire de travail (AS) du dispositif de commutation (VE), une image au moins partielle des informations de la mémoire de travail du dispositif de commutation (VE) peut être introduite et actualisée dans la mémoire (SP) du dispositif central d'exploitation (BZE) ou peut être actualisée sur la base des informations plus actuelles présentes dans la mémoire (SP) du dispositif central d'exploitation (BZE), de la mémoire de travail (AS) du dispositif de commutation (VE) ou sur la base d'informations plus actuelles, produites dans le terminal de l'exploitation (BT), de la mémoire (SP) du dispositif central d'exploitation (BZE), et que les informations mémorisées dans la mémoire (SP) du dispositif central d'exploitation (BZE) peuvent être transmises au terminal d'exploitation au moyen de procédures de communication réglées sur le réseau local (LAN) et peuvent y être affichées au choix dans une unité à écran de visualisation (BE) et que les informations spécifiques aux abonnés peuvent être évaluées dans le sens d'une détermination d'origine utilisée pour la production d'une information de commutation dans le terminal d'exploitation (BT) et pour la transmission de cette signalisation au dispositif de commutation (VE).

2. Dispositif de commutation assisté par calculateur suivant la revendication 1, caractérisé par le fait
que le dispositif de commutation (VE), le dispositif central d'exploitation (BZE), les terminaux d'exploitation (BT) ainsi que les postes d'interrogation (AP) sont agencés de telle sorte qu'un processus d'actualisation de la mémoire est déclenché par une signalisation correspondante, produite dans un terminal prédéterminé d'interrogation (AP), au moyen d'une signalisation produite automatiquement dans le dispositif central d'exploitation (BZE) à des instants définis, ou au moyen d'une signalisation produite dans le dispositif de commutation (BE).

3. Dispositif de commutation assisté par calculateur suivant l'une des revendications précédentes, caractérisé par le fait
que le dispositif de commutation (VE), le dispositif central d'exploitation (BZE), les terminaux d'exploitation (BT) ainsi que les postes d'interrogation (AP) sont agencés de telle sorte que des signalisations (m) et des informations (i), qui ne sont pas utilisées pour actualiser les mémoires (SP,AS) ou pour l'interrogation d'informations (i) à partir de la mémoire (SP) du dispositif central d'exploitation (BZE) ou pour le déclenchement de l'établissement d'une liaison d'un dispositif de recherche d'origines avec un abonné identifié, ne sont pas évaluées, ni retransmises par le dispositif central d'exploitation (BZE).

4. Dispositif de commutation assisté par calculateur suivant l'une des revendications précédentes, caractérisé par le fait
que le réseau local (LAN) peut être réalisé au moyen d'un réseau en anneau ou d'un réseau de bus.

5. Dispositif de commutation assisté par calculateur suivant l'une des revendications précédentes, caractérisé par le fait
que le dispositif central d'exploitation (BZE), les terminaux d'exploitation (BT) et les postes d'interrogation (AP) sont agencés de telle sorte que la procédure d'accès au support de transmission (M) du réseau local (LAN) peut être réalisée au moyen de procédés asynchrones de multiplexage temporel.

6. Dispositif de commutation assisté par calculateur suivant l'une des revendications précédentes, caractérisé par le fait
que le milieu de transmission (M) peut être réalisé au moyen de lignes en cuivre torsadées, de câbles coaxiaux ou de guides d'ondes optiques.
